**Europäisches Patentamt**

**European Patent Office**

**Office européen des brevets**

(11) Publication number: **0 150 708**
**B1**

# EUROPEAN PATENT SPECIFICATION

(45) Date of publication of patent specification: **18.10.89**

(21) Application number: **85100034.9**

(22) Date of filing: **02.01.85**

(51) Int. Cl.⁴: **C 03 C 8/02, G 21 C 3/62**

(54) Compositions for Glazing Nuclear Pellets.

(30) Priority: **20.01.84 US 572711**

(43) Date of publication of application:
**07.08.85 Bulletin 85/32**

(45) Publication of the grant of the patent:
**18.10.89 Bulletin 89/42**

(84) Designated Contracting States:
**BE DE FR GB IT SE**

(56) References cited:
**FR-A-2 007 993**
**FR-A-2 148 548**
**GB-A-2 025 929**
**US-A-3 122 484**
**US-A-3 141 852**

**CHEMISCHES ZENTRABLATT, no. 51, 1965, page 16355, no. 2256; P.W. MCMILLAN et al.: "Neutronenabsorbierende Glaskeramiken", & GLASS TECHNOL. 5, 142-49, 1964**

(73) Proprietor: **WESTINGHOUSE ELECTRIC CORPORATION**
**Westinghouse Building Gateway Center**
**Pittsburgh Pennsylvania 15222 (US)**

(72) Inventor: **Chubb, Walston**
**3450 MacArthur Drive**
**Murrysville Pennsylvania 15668 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

This invention relates to compositions for glazing nuclear pellets and more especially, to the use of cadmium-113 isotope in the form of cadmium oxide (CdO) as a burnable absorber, also referred to as a burnable poison, in a glazing composition including other glass forming oxides for glazing nuclear fuel pellets for controlling the nuclear reactivity of a reactor core and ultimately extending the operating life cycle of the nuclear reactor.

The process of nuclear fission involves the disintegration of fissionable nuclear fuel material into two or more fission products of lower mass number. Among other things, the process also includes a net increase in the number of available free neutrons which are the basis for a self-sustaining reaction. When a reactor has operated over a period of time, the fuel assembly with fissionable materials must ultimately be replaced due to depletion. Inasmuch as the process of replacement is time consuming, taking as much as six weeks, and costly in terms of lost power generation, it is desirable to extend the life of a given fuel assembly as long as practically feasible. For that reason, deliberate additions to the reactor fuel of parasitic neutron-capturing elements in calculated small amounts may lead to highly beneficial effects on a thermal reactor. Such neutron-capturing elements are usually designated as burnable absorbers if they have a high probability or cross section for absorbing neutrons while producing no new or additional neutrons or changing into new absorbers as a result of neutron absorption. During reactor operation, the burnable absorbers are progressively reduced in amount so that there is a compensation made with respect to the concomitant reduction in the fissionable material.

The life of a fuel assembly may be extended by combining an initially larger amount of fissionable material, as well as a calculated amount of burnable absorber. During the early stages of operation of such a fuel assembly, excessive neutrons are absorbed by the burnable absorber which undergoes transformation to elements of low neutron cross section which do not substantially affect the reactivity of the fuel assembly in the latter period of its life when the availability of fissionable material is lower. The burnable absorber compensates for the larger amount of fissionable material during the early life of the fuel assembly, but progressively less absorber captures neutrons during the latter life of the fuel assembly, so that a long life at relatively constant fission level is assured for the fuel assembly. Accordingly, with a fuel assembly containing both fissionable material and burnable absorber in carefully proportioned quantities, an extended fuel assembly life can be achieved with relatively constant neutron production and reactivity. Burnable absorbers which may be used include boron, gadolinium, cadmium, samarium, europium, and the like, which upon the absorption of neutrons result in isotopes of sufficiently low neutron capture cross section so as to be substantially transparent to neutrons.

The incorporation of burnable absorbers in fuel assemblies has thus been recognized in the nuclear field as an effective means of increasing fissionable material capacity and thereby extending reactor core life, for example, to eighteen months without the requirement for fissionable material replacement. Burnable absorbers are used either uniformly mixed with the fissionable material, i.e., distributed absorber, deposited as a coating on the exterior of nuclear fuel pellets containing fissionable material as disclosed in U.S. Patent No. 3,427,222, or are placed discretely as separate elements in the reactor core. Thus, the net reactivity of the reactor core can be maintained relatively constant over the active life of a reactor core.

Where burnable absorbers are deposited as a coating on the exterior of nuclear fuel pellets, boron containing compounds such as boron carbide ($B_4C$), boron nitride (BN) and zirconium diboride ($ZrB_2$) are most frequently used. Boron containing burnable absorbers may be applied as a coating of predetermined thickness to nuclear fuel pellets by a variety of techniques, for example, dip coating a nuclear fuel pellet in a composition containing a boron compound and a ceramic binder as disclosed in the above-mentioned United States Patent. However, the use of boron containing compounds as a burnable absorber is known to have a number of undesirable characteristics. For example, boron has a moderate burnout rate which often leaves residual burnable absorber within the coating at the end of any given time, thereby often adversely affecting the calculated control of the nuclear reactivity over the operating life cycle of the nuclear reactor. In addition, the burnout of boron from the coating often results in the retention within the fuel rods of undesirable gases produced by the boron burnout, thereby also adversely affecting the performance of the nuclear fuel rod and burnable absorber.

Accordingly, it can be appreciated that there is an unsolved need for a glazed nuclear fuel pellet and a glazing composition therefor which includes one or more burnable absorbers having a controlled increased rate of burnout without producing undesirable gases such that the nuclear reactivity of a reactor core can be effectively controlled and ultimately extending the operating life cycle of the nuclear reactor.

Accordingly, the present invention resides in the use of a composition containing a glaze-forming oxide and a burnable absorber as a glazing for nuclear fuel pellets, characterized in that the burnable absorber comprises cadmium oxide present in an amount of from 80 to 90% by weight.

The invention also includes a glazed nuclear fuel pellet comprising fissionable material formed into a body and a glaze provided over at least a portion of the surface of said body with said glaze having the above defined composition.

Cadmium oxide has now been found to be similar in chemical behavior to the lead and zinc oxides, but generally forms higher melting compounds than lead oxide. For example, cadmium silicate melts at about 1240°C, whereas lead silicate melts at about 750°C. A cadmium oxide/boron oxide eutectic melts at about 900°C, whereas a lead oxide/boron oxide eutectic melts at about 500°C. In accordance with the present invention, glasses suitable for use as a glaze on nuclear fuel elements and containing a burnable absorber can be made using cadmium oxide instead of lead oxide, except that such glazes must be fired at higher temperatures than the lead-based glazes. In particular, it has been further found that there are a group of glasses known as borosilicate glasses which include boron trioxide as a suitable glass forming component. Since cadmium oxide, like lead oxide, forms a series of glasses with silicon dioxide, the present invention broadly contemplates the substitution of cadmium oxide, wholly or in part, for the boron trioxide in these borosilicate glasses. By utilizing a cadmium oxide-glazed nuclear fuel pellet, it is possible to control the reactivity and extend the operating life cycle of a fuel assembly while increasing the rate of burnout of the burnable absorber and reducing the amount of undesirable gases produced therefrom.

The use of cadmium-113 isotope in the form of cadmium oxide as a burnable absorber increases the rate of burnout of the burnable absorber and therefore results in less burnable absorber being present at the end of any given time.

Conveniently, the glaze-forming oxide is silicon dioxide ($SiO_2$), aluminum oxide ($Al_2O_3$), boric oxide ($B_2O_3$), sodium monoxide ($Na_2O$), potassium oxide ($K_2O$), lead monoxide (PbO) or mixtures thereof, such as a borosilicate glass.

In another embodiment of the invention, there is included a second burnable absorber, the first and second burnable absorbers having different neutron capture cross sections. Desirably, the second burnable absorber comprises boron in at least the form of boron-10 isotope, for example, sodium borate ($Na_2B_4O_7 \cdot 10H_2O$).

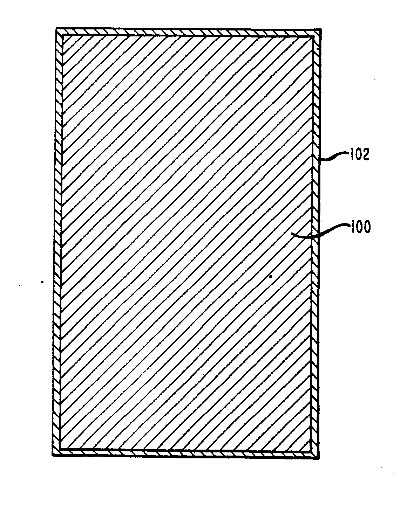

In order that the invention can be more clearly understood, convenient embodiments thereof will now be described, by way of example, with reference to the accompanying drawing which is a sectional representation of a nuclear fuel pellet of fissionable material having a glazed coating.

Referring to the drawing, there is illustrated a nuclear fuel pellet 100 of fissionable material, that is, a material fissionable by neutrons of thermal energy such as U-235, U-233 and Pu-239. Coating the exterior of the nuclear fuel pellet 100 is a glaze 102 including a burnable absorber which comprises an oxide of cadmium-113 isotope which has a neutron capture cross section of about 20,000 barns per atom. The cadmium-113 isotope is above five times more effective as a burnable absorber than the boron-10 isotope which has a neutron capture cross section of only about 3850 barns per atom. The glaze 102 containing cadmium-113 isotope is useful as a burnable absorber in effectively controlling the reactivity of a reactor core and ultimately extending the operating life cycle of the nuclear reactor. The cadmium-113 isotope, as a constituent of the glaze 102 coating the nuclear fuel pellet 100, functions as a burnable absorber which burns out at a rate which reduces the negative reactivity introduced into the reactor by the cadmium-113 isotope at a rate approximately equal to the decline in excess reactivity due to fissionable material depletion. The glaze 102, in addition to containing the oxide of cadmium-113 isotope as a burnable absorber, contains any of the common constitutes of glass such as silicon dioxide ($SiO_2$), aluminum oxide ($Al_2O_3$), boric oxide ($B_2O_3$), sodium monoxide ($Na_2O$), potassium oxide ($K_2O$), lead monoxide (PbO), and mixtures thereof. However, it has been found that for the glaze 102 to be useful as a burnable absorber, the oxide of the cadmium-113 isotope should be present in greater than 0.5 percent by weight. For example, the glaze 102 may contain cadmium oxide in the range of from 50 to 95 percent by weight; preferably in the range of from 70 to 95 percent by weight cadmium oxide; the preferred range being from 82 to 90 percent by weight cadmium oxide; and the balance being, for example, silicon dioxide.

The use of boron-10 isotope as a burnable absorber in a coating on a nuclear fuel pellet contemplates a concentration of the order of 3.2 milligrams of natural boron per centimeter of pellet length. The corresponding quantity of cadmium-113 isotope is 11.0 milligrams of natural cadmium per centimeter of pellet length. When cadmium-113 isotope is substituted for the boron-10 isotope, such substitution would, for example, be approximately in the ratio of 11 parts by weight of cadmium to 3.2 parts by weight of boron. This substitution of the oxide of cadmium-113 isotope for the boron-10 isotope, increases the rate of burnout of the burnable absorber, reduces the amount of undesirable gases produced by the burnout of the boron, and produces a harder and more refractory glaze coating. In this regard, the cadmium-113 isotope produces no gaseous products as a result of neutron capture. Thus, the use of the oxide of cadmium-113 isotope as a burnable absorber burns out more rapidly than the boron-10 isotope and leaves less residual burnable absorber at any given time than that of the boron-10 isotope.

Referring again to the sole figure, a typical nuclear reactor pellet 100 of fissionable material, such as enriched uranium dioxide or mixed oxides, might be of the order of 0.5 inches (1.3 centimeters) in length. The nuclear fuel pellet 100 is expected to have a cadmium silicate glaze coating containing about 16 milligrams of the oxide of cadmium-113 isotope, i.e., about 87 percent cadmium by weight. However, greater or lesser amounts of cadmium oxide may be used in coating such nuclear fuel pellets as the present invention broadly relates to the use of cadmium oxide as a burnable absorber in a glaze for such nuclear fuel pellets, wherein cadmium-113 isotope is substituted, wholly or in part, for boron-10 isotope.

Further, although there has thus far been described the use of the oxide of cadmium-113 isotope as a burnable absorber in a glaze for nuclear fuel pellets, it is also contemplated that a combination of two burnable absorbers, each having different neutron capture cross sections, may be incorporated into the glaze for controlling the reactivity of the reactor core and ultimately extending the operating life cycle of the nuclear reactor. The incorporation of more than one burnable absorber having different neutron capture cross sections, provides an extra degree of freedom for the nuclear engineer in the design of a reactor core. The two burnable absorbers burn out at different rates so that the reactivity of the reactor core can be controlled with more finesse. The use of such a sophisticated control can result in savings of fissionable material and produce more energy per unit of fissionable material loaded into a reactor core. In accordance with the present invention, a cadmium borosilicate glaze may contain from about 50 to 75 percent by weight cadmium oxide, two (2) to three (3) percent by weight boric oxide, three (3) to six (6) percent by weight potassium oxide and the balance silicon dioxide. The boron-10 isotope can also be present as sodium borate ($Na_2B_4O_7 \cdot 10H_2O$).

The glaze 102 is applied to the nuclear fuel pellet 100 by a dip coating process. Generally, the constituents of the glaze 102 are ground to a fine powder and made into a thin slurry with water. The pellets 100 to be glazed are dipped into the slurry which can be thickened or thinned to produce the ultimate coating of the proper thickness. The wet glaze containing cadmium oxide is dried to from 70 to 90°C and subsequently fired to melt the glaze to hard refractory coating upon cooling. However, it should be noted that the nuclear fuel pellet 100 may be dipped into the slurry one or more times as required to produce the ultimate coating thickness, each dip being followed by a drying step. Thus, several dips can be applied to provide greater coating thicknesses as required.

The invention will now be illustrated with reference to the following Example in which a glaze 102 containing the oxide of cadmium-113 isotope is applied as a burnable absorber of predetermined thickness to a nuclear fuel pellet 100 containing fissionable material.

Example

A cadmium silicate glaze composition for glazing nuclear fuel pellets was prepared by grinding cadmium oxide powder and pure quartz powder in a porcelain ball mill with porcelain balls for 48 hours. The resulting mixed powders containing 89 percent by weight cadmium oxide, the balance silicon dioxide, was made into a slurry using water. Cylinders of uranium dioxide were dipped into the slurry and dried at about 70 to 90°C and subsequently weighed. The dipping process was repeated until the cylinders had picked up the desired weight of dry slurry, that is, about 18 mg per 1.3 centimeters of cylinder length. The coated cylinders were fired at 1350°C in an inert atmosphere furnace for three (3) hours to produce ceramic cylinders with a nearly uniform coating of cadmium silicate glaze of about five (5) microns thick. The glaze cylinders were heated and cooled in the furnace at a rate less than 15°C per minute to prevent thermal shock to the cylinders. The furnace cycle was about two (2) hours for heat up, three (3) hours at glazing temperature, and twelve (12) hours for cool down.

Although an exemplary application of the present invention would glaze nuclear fuel pellets (each having a generally cylindrical configuration with an approximately one-third inch diameter and an approximately one-half inch length) for placement in fuel rods which make up fuel assemblies, the glazing of nuclear fuel plates, columns or other nuclear fuel shapes is considered to be equivalent to the glazing of nuclear fuel pellets, which has been hereinbefore described.

**Claims**

1. The use of a composition containing a glaze-forming oxide and a burnable absorber as a glazing for nuclear fuel pellets, characterized in that the burnable absorber comprises cadmium oxide present in an amount of from 80 to 90% by weight.

2. The use according to claim 1, characterized in that the cadmium oxide is present at about 89% by weight.

3. The use according to claim 1 or 2, characterized in that cadmium is present in the form of cadmium-113 isotope.

4. The use according to any of claims 1 to 3, characterized in that the glaze-forming oxide is silicon dioxide ($SiO_2$), aluminium oxide ($Al_2O_3$), boric oxide ($B_2O_3$), sodium monoxide ($Na_2O$), potassium oxide ($K_2O$), lead monoxide (PbO) or mixtures thereof.

5. The use according to claim 4, characterized in that the glaze-forming oxide comprises a borosilicate glass.

6. The use according to any of claims 1 to 5, characterized in that a portion of the burnable absorber has a different neutron capture cross-section from that of cadmium oxide.

7. The use according to claim 6, characterized in that the portion comprises boron (B) in at least the form of boron-10 isotope.

8. The use according to claim 7, characterized in that the boron is present as sodium borate ($Na_2B_4O_7 \cdot 10H_2O$).

9. The use according to claim 7, characterized in that the boron is present as boric oxide ($B_2O_3$).

10. The use according to any of claims 7 to 9, characterized in that the ratio is of 11 parts by weight of cadmium to 3.2 parts by weight of boron.

11. A glazed nuclear fuel pellet comprising fissionable material formed into a body and a glaze provided over at least a portion of the surface of said body, characterized in that said glaze has a composition as claimed in any of the preceding claims.

**Patentansprüche**

1. Verwendung einer Zusammensetzung, die ein glasurbildendes Oxid und einen abbrennbaren Absorber enthält, als Glasurmasse für Kernbrennstofftabletten, dadurch gekennzeichnet, daß der abbrennbare Absorber Cadmiumoxid in einer Menge von 80 bis 90 Gewichtsprozent enthält.

2. Verwendung nach Anspruch 1, dadurch gekennzeichnet, daß das Cadmiumoxid in einem Anteil von etwa 89 Gewichtsprozent vorhanden ist.

3. Verwendung nach Anspruch 1 oder 2, dadurch gekennzeichnet, daß das Cadmium in Form des Cadmium-113-Isotops vorliegt.

4. Verwendung nach einem der Ansprüche 1 bis 3, dadurch gekennzeichnet, daß das glasurbildende Oxid Siliziumdioxid ($SiO_2$), Aluminiumoxid ($Al_2O_3$), Boroxid ($B_2O_3$), Natriummonoxid ($Na_2O$), Caliumoxid ($K_2O$), Bleimonoxid (PbO) oder Gemische hiervon aufweist.

5. Verwendung nach Anspruch 4, dadurch gekennzeichnet, daß das glasurbildende Oxid ein Borsilikatglas aufweist.

6. Verwendung nach einem der Ansprüche 1 bis 5, dadurch gekennzeichnet, daß ein Teil des abbrennbaren Absorbers einen von demjenigen von Cadmiumoxid verschiedenen Neutroneneinfangquerschnitt hat.

7. Verwendung nach Anspruch 6, dadurch gekennzeichnet, daß der genannte Absorberteil Bor (B) mindestens in Form des Bor-10-Isotops enthält.

8. Verwendung nach Anspruch 7, dadurch gekennzeichnet, daß das Bor in Form von Natriumborat vorhanden ist ($Na_2B_4O_7 \cdot 10H_2O$).

9. Verwendung nach Anspruch 7, dadurch gekennzeichnet, daß das Bor als Boroxid vorliegt ($B_2O_3$).

10. Verwendung nach einem der Ansprüche 7 bis 9, dadurch gekennzeichnet, daß ein Verhältnis von 11 Gewichtsteilen Cadmium zu 3,2 Gewichtsteilen Bor vorhanden ist.

11. Glasierte Brennstofftablette, bestehend aus spaltbarem Material in Tablettenform und einer auf mindestens einem Teil der Oberfläche der Tablette gebildeten Glasur, dadurch gekennzeichnet, daß die Glasur eine Zusammensetzung nach einem der vorhergehenden Ansprüche aufweist.

**Revendications**

1. Utilisation d'une composition contenant un oxyde de formation d'émail et un absorbeur combustible constituant un émaillage pour des pastilles de combustible nucléaire, caractérisée en ce que l'absorbeur combustible comporte de l'oxyde de cadmium présent dans la proportion de 80 à 90% en poids.

2. Utilisation selon la revendication 1, caractérisée en ce que l'oxyde de cadmium est présent à environ 89% en poids.

3. Utilisation selon la revendication 1 ou 2, caractérisée en ce que le cadmium est présent sous la forme de l'isotope cadmium-113.

4. Utilisation selon l'une quelconque des revendications 1 à 3, caractérisée en ce que l'oxyde de formation d'émail est du dioxyde de silicium ($SiO_2$), de l'oxyde d'aluminium ($Al_2O_3$), de l'oxyde borique ($B_2O_3$), du monoxyde de sodium ($Na_2O$), de l'oxyde de potassium ($K_2O$), du monoxyde de plomb (PbO) ou des mélanges de ceux-ci.

5. Utilisation selon la revendication 4, caractérisée en ce que l'oxyde de formation d'émail comporte un verre de borosilicate.

6. Utilisation selon l'une quelconque des revendications 1 à 5, caractérisée en ce qu'une partie de l'absorbeur combustible a une section efficace de capture des neutrons différente de celle de l'oxyde de cadmium.

7. Utilisation selon la revendication 6, caractérisée en ce que la partie comporte du bore (B) au moins sous la forme de l'isotope bore-10.

8. Utilisation selon la revendication 7, caractérisée en ce que le bore est présent sous la forme de borate de sodium ($Na_2B_4O_7 \cdot 10H_2O$).

9. Utilisation selon la revendication 7, caractérisée en ce que le bore est présent sous la forme d'oxyde borique ($B_2O_3$).

10. Utilisation selon l'une quelconque des revendications 7 à 9, caractérisée en ce que le rapport est de 11 parties en poids de cadmium pour 3,2 parties en poids de bore.

11. Pastille de combustible émaillée comportant un matériau fissile ayant la forme d'un corps et un émail disposé au moins sur une partie de la surface dudit corps, caractérisée en ce que ledit émail a une composition telle que revendiquée dans l'une quelconque des revendications précédentes.

EP 0 150 708 B1

102

100

1